# EUROPEAN PATENT APPLICATION

(11) **EP 4 471 697 A1**
(43) Date of publication of application: **04.12.2024**
(21) Application number: 24163388.2
(22) Date of filing: 13.03.2024
(51) Int. Cl.: G06Q 20/20, G06Q 20/22, G07G 1/00, G07G 1/01, G07G 1/12

(54) **SETTLEMENT DEVICE AND METHOD FOR SETTLEMENT DEVICE**

(30) Priority: 30.05.2023 JP 2023088360
(71) Applicant: Toshiba TEC Kabushiki Kaisha, Tokyo 141-8562 (JP)
(72) Inventor: Fukuzawa, Ichiro, Tokyo, 141-8562 (JP)
(74) Representative: Bandpay & Greuter

(57) **Abstract**

A settlement device includes a processor. The processor is configured to receive a selection of a price payment method out of a plurality of price payment methods by a store clerk via a first touch panel or a keyboard and to receive a selection of a price payment method out of the plurality of price payment methods by a customer via a second touch panel. When the first touch panel and the keyboard are configured to provide the selection, the processor is configured not to receive the selection from the second touch panel. When the second touch panel is configured to provide the selection, the processor is configured not to receive the selection from the first touch panel and the keyboard.

## Description

### FIELD

Embodiments of the present disclosure relate to settlement devices and a method for settlement devices for retail transactions and the like.

### BACKGROUND

There are transaction settlement devices that support various payment methods such as cash, credit card, or electronic money. As a settlement device, there are a type (clerk-service type) with which a store clerk selects the payment method option desired by a customer then performs the payment processing accordingly. There is also settlement device type (self-service type) with which the customer himself or herself selects the payment method and then performs payment processing. For the self-service type, it is not necessary for a store clerk to intervene, and work efficiency of the store clerk can be improved. However, for example, if the customer is an elderly person, a foreigner, a child, or the like, the customer may not know the procedure for paying the price, which may waste time. Therefore, there is a demand for a settlement device that enables a store clerk to easily intervene in payment processing operations without confusion for self-service type settlement devices.

### DISCLOSURE OF INVENTION

To this end, there is provided a settlement device according to claim 1. There is also provided a point-of-sale system according to claim 9. There is also provided a settlement method for point-of-sale systems according to claim 11. Preferred embodiments are set out in the dependent claims.

### BRIEF DESCRIPTION OF THE DRAWINGS

FIG. 1 is a diagram of a commodity sales system according to an embodiment.
FIG. 2 is a block diagram depicting aspects of a settlement device.
FIG. 3 is a schematic diagram depicting a storage area of a settlement device.
FIG. 4 is a block diagram depicting functional aspects implemented by a processor of a settlement device.
FIG. 5 is a flowchart of first information processing executed by a processor of a settlement device.
FIG. 6 is a flowchart of second information processing executed by a processor of a settlement device.
FIG. 7 is a flowchart of second information processing executed by a processor of a settlement device.
FIG. 8 is a flowchart of third information processing executed by a processor of a settlement device.
FIG. 9 is an example of a registration screen displayed on a touch panel of an input device.
FIG. 10 is an example of a registration screen displayed on a display of an input device.
FIG. 11 is an example of a subtotal screen displayed on a touch panel of an input device.
FIG. 12 is an example of a first notification screen displayed on a display of an input device.
FIG. 13 is an example of a second notification screen displayed on a display of an input device.
FIG. 14 is an example of a total screen displayed on a first touch panel of a settlement device.
FIG. 15 is a schematic diagram showing a transition example of information displayed in a second customer area.
FIG. 16 is an example of a payment method selection screen displayed on a second touch panel of a settlement device.
FIG. 17 is an example of a payment method selection screen displayed on a first touch panel of a settlement device.
FIG. 18 is an example of a store clerk operation-in-progress screen displayed on a second touch panel of a settlement device.
FIG. 19 is an example of a payment support screen displayed on a second touch panel of a settlement device.
FIG. 20 is an example of a payment check screen displayed on a second touch panel of a settlement device.
FIG. 21 is an example of a payment completion screen displayed on a first touch panel of a settlement device.
FIG. 22 is an example of a payment completion screen displayed on a second touch panel of a settlement device.
FIG. 23 is a diagram showing transition of screens displayed on a first touch panel and a second touch panel, respectively, in a case of a customer performing a payment operation by himself or herself.
FIG. 24 is a diagram showing transition of screens displayed on a first touch panel and a second touch panel, respectively, in a case of a store clerk performing a selection operation of a price payment method on behalf of a customer.

### DETAILED DESCRIPTION

In general, an embodiment provides technological solutions concerning an improved settlement device that enables a store clerk to more easily intervene in payment operations at a self-service payment terminal or the like without confusion.

In one embodiment, a settlement device A settlement device includes a processor. The processor is configured to receive a selection of a price payment method out of a plurality of price payment methods by a store clerk via a first touch panel or a keyboard and to receive a selection of a price payment method out of the plurality of price payment methods by a customer via a second touch panel. When the first touch panel and the keyboard are configured to provide the selection, the processor is configured not to receive the selection from the second touch panel. When the second touch panel is configured to provide the selection, the processor is configured not to receive the selection from the first touch panel and the keyboard.

Hereinafter, an example embodiment of a settlement device that enables a store clerk to easily intervene in customer payments at a self-payment terminal or the like will be described with reference to the drawings. In the present embodiment, a commodity sales system is described in which an input device for inputting information about a commodity to be purchased by a customer is separate from a settlement device that is used by the customer for settling the transaction.

### Commodity Sales System

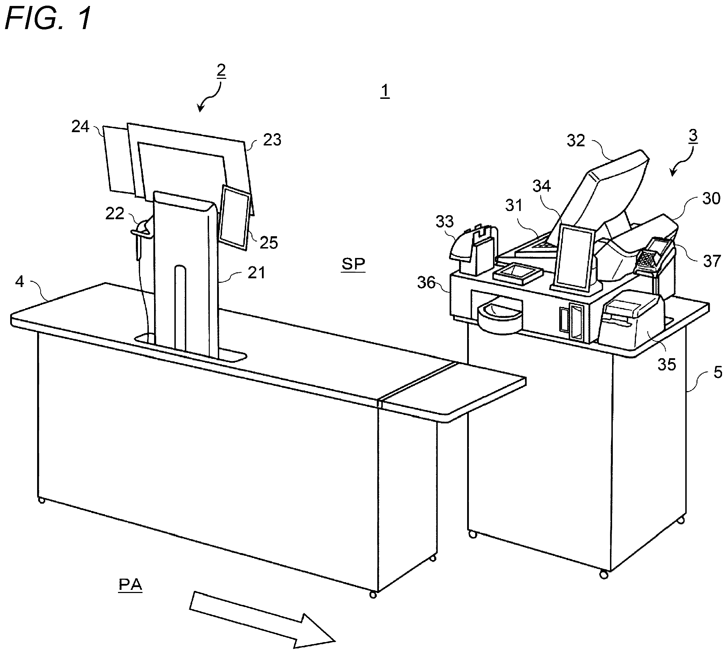

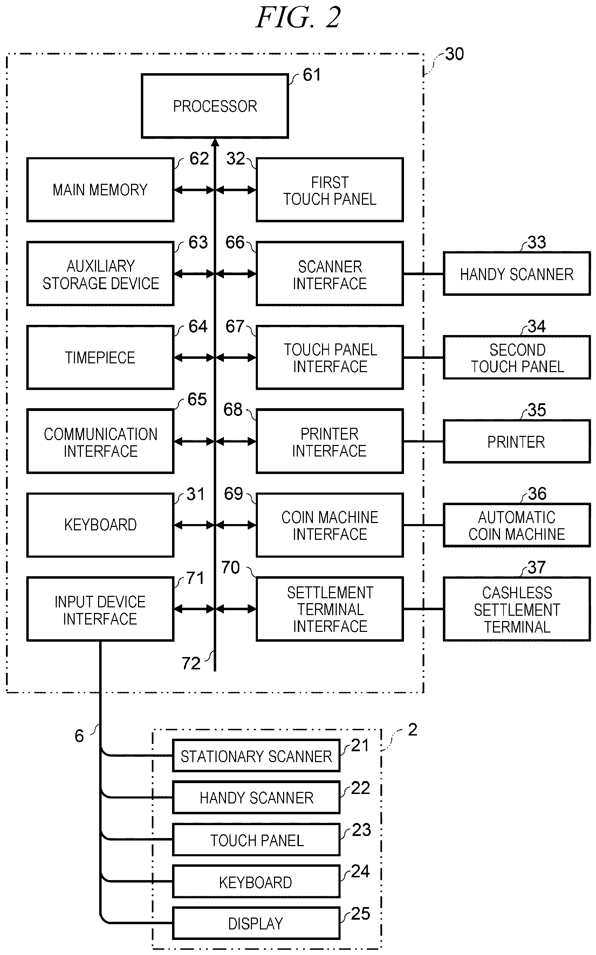

FIG. 1 is a schematic configuration diagram of a commodity sales system 1 (corresponding to a point-of-sale system) according to one embodiment. The commodity sales system 1 includes an input device 2 and a settlement device 3. The input device 2 and the settlement device 3 are connected by a transmission cable 6 (see FIG. 2) such as a local area network (LAN) cable.

The input device 2 is attached to a checkout counter 4. The checkout counter 4 is disposed along a checkout lane PA on which a customer (a purchaser) generally moves in a direction of an arrow in the drawing. The input device 2 is attached to substantially the center (middle) of atop surface of the checkout counter 4. A space on an upstream side of the checkout lane PA from the input device 2 is used as a space for placing a purchase commodity before a commodity code of the purchase commodity is input (registered). A space on a downstream side of the checkout lane PA from the input device 2 is used as a space for placing the purchase commodity after the commodity code has been input (the commodity has been registered for purchase in the transaction). The input device 2 is used for inputting the commodity code or the like attached to the purchase commodity. The settlement device 3 is used for storing, in a main memory 62, information about the purchase commodity, the commodity code and the like for which was input via the input device 2. The storing the information about the purchase commodity in the main memory 62 in this way is referred to as registration. The settlement device 3 settles a transaction based on the purchase commodities registered and stored in the main memory 62.

The input device 2 includes a stationary scanner 21, a handy scanner 22 (handheld scanner), a touch panel 23, a keyboard 24, and a display 25 as input and output devices. In the input device 2, the stationary scanner 21 is disposed to project upward from the top surface of the checkout counter 4. The handy scanner 22, the touch panel 23, the keyboard 24, and the display 25 are disposed around the stationary scanner 21.

Specifically, the stationary scanner 21 is fixed to the top surface of the checkout counter 4. The stationary scanner 21 is a vertical type and is fixed such that a barcode reading window is located on a surface on the opposite side of the checkout lane PA. The handy scanner 22 is mounted to one side of the stationary scanner 21. The touch panel 23 is attached to an upper portion of the stationary scanner 21 such that an operation panel surface of the touch panel 23 faces the same direction of the reading window of the stationary scanner 21. The keyboard 24 is attached to a side portion of the touch panel 23 such that the keyboard 24 faces the same operation direction of the operation panel surface of the touch panel 23. Further, the display 25 is attached to one side portion of the stationary scanner 21 such that a display screen of the display 25 faces the side of the checkout lane PA. Note that the display 25 may be a touch panel.

With the disposition of the input and output devices as described above, a store clerk standing in a space SP can operate the stationary scanner 21, the handy scanner 22, the touch panel 23, or the keyboard 24 and input information about a commodity being purchased by the customer (purchase commodity) such as a commodity code, a purchase quantity, and a price-cut amount. At this time, the store clerk can check the commodity name, the unit price, and the like of the purchase commodity against the information displayed on the touch panel 23. The customer can check the commodity name, the unit price, and the like of the purchase commodity with the information displayed on the display 25. If the customer presents a barcode of an electronic receipt ID by display on a smartphone or the like, the store clerk can read the barcode with the handy scanner 22. Consequently, the electronic receipt ID can be input and a receipt indicating details of the commercial transaction with the customer may be dispensed in the form of an electronic receipt.

The settlement device 3 includes a keyboard 31 and a first touch panel 32 integrated with a device main body 30. The settlement device 3 includes a handy scanner 33, a second touch panel 34, a printer 35, an automatic coin machine 36, a cashless settlement terminal 37 externally attached to the device main body 30. The settlement device 3 is placed on the top surface of a register counter 5 near the downstream side end portion of the checkout counter 4.

Specifically, in the settlement device 3, the device main body 30 is placed on the register counter 5 such that a key surface of the keyboard 31 and an operation panel surface of the first touch panel 32 face the side of the space SP where the store clerk is standing. The handy scanner 33, the second touch panel 34, the printer 35, the automatic coin machine 36, and the cashless settlement terminal 37 are disposed around the device main body 30. The handy scanner 33 is disposed where the store clerk standing in the space SP can operate the handy scanner 33. The second touch panel 34 is disposed where the customer standing in the checkout lane PA can view a display screen of the second touch panel 34. The printer 35 is disposed where the customer standing in the checkout lane PA can easily receive a receipt. The automatic coin machine 36 is a device providing a function of counting bills or coins deposited from a depositing port and calculating a deposited amount, a sorting deposited cash for each of the various possible denominations and storing the cash in a safe, and extracting bills or coins equivalent to a change due amount from the safe and dispensing the bills or the coins to a dispensing port. The automatic coin machine 36 is disposed where the customer standing in the checkout lane PA can easily deposit money and receive dispensed change. The cashless settlement terminal 37 is a device specialized for processing cashless settlement such as credit card settlement, electronic money settlement, and code settlement. The cashless settlement terminal 37 is disposed where the customer standing in the checkout lane PA can easily operate the cashless settlement terminal 37 when the customer performs cashless settlement such as credit card settlement, electronic money settlement, and code settlement.

With the disposition of the devices described above, the store clerk is an operator of the keyboard 31, the first touch panel 32, and the handy scanner 33. The customer is an operator of the second touch panel 34, the printer 35, the automatic coin machine 36, and the cashless settlement terminal 37. That is, the first touch panel 32 functions as a display unit for store clerks. The second touch panel 34 functions as a display unit for customers.

In general, in a large retail store such as a supermarket or a home improvement center, a plurality of commodity sales systems 1 (sales registers) with the configuration described above are installed in parallel in a checkout place divided from a sales floor where commodities are displayed. On the other hand, in a small retail store such as a specialty store, only one commodity sales system 1 may be installed in the store.

### [Description of Configuration of Settlement Device]

FIG. 2 is a block diagram of the settlement device 3. As shown in FIG. 2, the settlement device 3 includes a processor 61, main memory 62, an auxiliary storage device 63, a timepiece 64 (clock), a communication interface 65, a scanner interface 66, a touch panel interface 67, a printer interface 68, a coin machine interface 69, a settlement terminal interface 70, and an input device interface 71 as components in the device main body 30. The processor 61, the main memory 62, the auxiliary storage device 63, the timepiece 64, the communication interface 65, the scanner interface 66, the touch panel interface 67, the printer interface 68, the coin machine interface 69, the settlement terminal interface 70, and the input device interface 71 are connected by a system transmission line 72. The system transmission line 72 is a transmission line including an address bus, a data bus, a control signal line, and the like.

In the settlement device 3, the processor 61 and the other units are connected by the system transmission line 72 to configure a computer. In the settlement device 3, the keyboard 31 and the first touch panel 32 are connected to the computer via the system transmission line 72.

The processor 61 controls the units according to an operating system and/or an application program in order to implement the various functions of the settlement device 3. The processor 61 is, for example, a central processing unit (CPU). The processor 61 can be a multicore processor including a plurality of processor cores and may be capable of executing processing in parallel.

The main memory 62 includes a nonvolatile memory area and a volatile memory area. For example, the main memory 62 stores an operating system or an application program in the nonvolatile memory area. The main memory 62 may store, in the nonvolatile or volatile memory area, data necessary for the processor 61 to execute processing for controlling the units. The main memory 62 uses the volatile memory area as a work area where data is rewritten as appropriate by the processor 61. The nonvolatile memory area is, for example, a read only memory (ROM). The volatile memory area is, for example, a random access memory (RAM).

For example, an electric erasable programmable read-only memory (EEPROM), a hard disk drive (HDD), a solid-state drive (SSD), or the like can be the auxiliary storage device 63. The auxiliary storage device 63 stores data used by the processor 61 to perform various processing, data created by the processing by the processor 61, and the like. The auxiliary storage device 63 may store the application program described above.

The timepiece 64 tracks a date and time. The processor 61 processes, as a present date and time, the date and the time tracked by the timepiece 64.

The communication interface 65 is an interface for performing data communication with a store server connected via a communication network. The store server is a computer for collecting and totalizing sales data of commodities processed by the settlement device 3. The store server stores a commodity master including commodity data such as commodity names and unit prices of the commodities sold in the store. The store server may also track overall sales, commodity stock levels (inventory), and the like of the store.

Each of the scanner interface 66, the touch panel interface 67, the printer interface 68, the coin machine interface 69, and the settlement terminal interface 70 are interfaces for performing data communication with devices externally attached to the device main body 30. That is, the scanner interface 66 performs data communication with the handy scanner 33. The touch panel interface 67 performs data communication with the second touch panel 34. The printer interface 68 performs data communication with the printer 35. The coin machine interface 69 performs data communication with the automatic coin machine 36. The settlement terminal interface 70 performs data communication with the cashless settlement terminal 37.

The input device interface 71 is an interface for performing data communication with the input device 2 connected by the transmission cable 6. That is, the input device interface 71 performs data communication with the stationary scanner 21, the handy scanner 22, the touch panel 23, the keyboard 24, and the display 25.

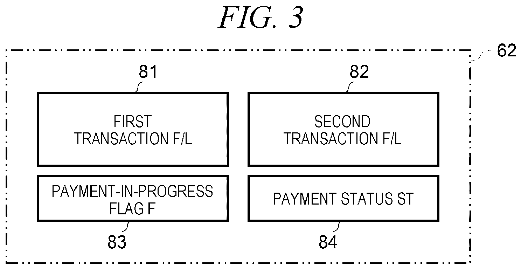

FIG. 3 is a schematic diagram showing a main storage area formed in the main memory 62. The settlement device 3 uses parts of the volatile storage area in the main memory 62 as areas of a first transaction file 81 ("first transaction F/L"), a second transaction file 82 ("second transaction F/L"), a flag memory 83 ("payment-in-progress flag F"), and a status memory 84 ("payment status ST"). Both of the first transaction file 81 and the second transaction file 82 are areas for storing sales data to be processed as one transaction. The sales data includes items such as a commodity code, a commodity name, a unit price, a purchase quantity, and a sales amount of a purchase commodity. The sales amount is an amount obtained by multiplying the commodity unit price by the commodity purchase quantity. The first transaction file 81 stores sales data related to the purchase commodity from when input of the commodity code of a transaction is started until the input of such data is ended for the transaction. The second transaction file 82 stores the sales data from when the input of the commodity code of the purchase commodity ends until the transaction is settled. Specifically, the first transaction file 81 and the second transaction file 82 store information input from the stationary scanner 21, the handy scanner 22, the touch panel 23, or the keyboard 24 of the input device 2. For example, information such as commodity codes, purchase quantities, and price-cut amounts for each commodity registered to be purchased by the customer. Additionally, information input via the keyboard 31 or the first touch panel 32 of the settlement device 3 such as a commodity code, a purchase quantity, and a price-cut amount related to a purchase commodity may also be included.

The flag memory 83 is an area for storing a payment-in-progress flag F. The payment-in-progress flag F is one-bit data for identifying whether a transaction is has been settled (paid) at the settlement device 3. In the present embodiment, the payment-in-progress flag F value indicating that transaction has been settled is "1" and the payment-in-progress flag F value indicating that the transaction is not settled is "0".

The status memory 84 is an area for storing a payment status ST. The payment status ST represents a current payment mode. As the payment modes, there are a self-mode and a support mode. The self-mode is a mode in which the customer performs the payment operation by himself or herself. The support mode is a mode in which the store clerk intervenes in the payment operation. In the present embodiment, the payment status ST value representing the self-mode is "10", and the payment status ST value representing the support mode is "20". The payment status ST before the payment operation is started is "00".

### [Description of Functions of Settlement Device]

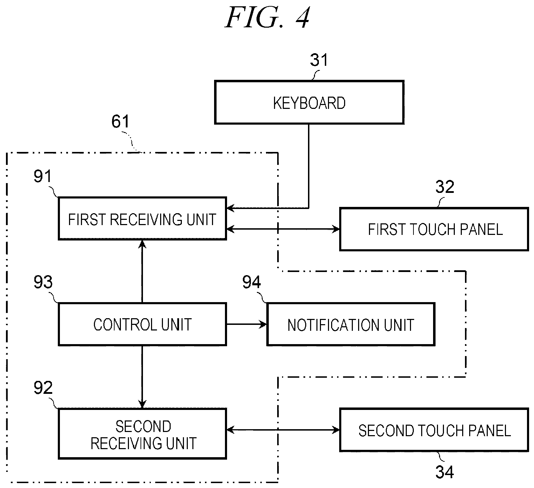

FIG. 4 is a block diagram showing certain functional aspects provided by the processor 61 of the settlement device 3. As shown in FIG. 4, the processor 61 provides functions of a first receiving unit 91, a second receiving unit 92, a control unit 93, and a notification unit 94.

The first receiving unit 91 is for receiving selection input for selecting a price payment method out of a plurality of possible price payment methods by an operation of the store clerk. Specifically, the first receiving unit 91 causes the first touch panel 32 to display a payment method selection screen and receives the selection input for the price payment method. The first receiving unit 91 receives the selection input for a price payment method using a plurality of payment keys to which the price payment methods are respectively assigned among various keys disposed on the keyboard 31. The first receiving unit 91 may include a function of receiving selection input for performing payment of a price by a particular determined method (e.g. a default method) in response to the operation of the store clerk, instead of receiving a particular selection input for a price payment method by the operation of the store clerk. In this case, specifically, the first receiving unit 91 causes the display unit for store clerks, that is, the first touch panel 32 to display a screen including a button for executing payment, and receives an instruction to execute the payment of a price. The first receiving unit 91 may be configured to provide an execution key for executing the operation of executing payment of a price among various keys disposed on the keyboard 31, and receive selection input of executing the payment of the price using the execution key. Execution the payment of a price may include determining the price to be paid according to a selected payment method or the like.

The second receiving unit 92 is for receiving selection input for a price payment method out of the plurality of possible price payment methods in response to an operation of the customer. Specifically, the second receiving unit 92 causes the second touch panel 34 to display a payment method selection screen, and receives the selection input for the price payment method. The second receiving unit 92 may include a function of performing a determination for selecting the method for payment of a price by the customer, instead of receiving the selection input for a particular price payment method selected from the plurality of price payment methods by the customer. In this case, specifically, the second receiving unit 92 causes the second touch panel 34 to display a screen including a button for determining payment (e.g., a default payment method selection), and receives an instruction to execute the payment of the price by the determined method.

The control unit 93 has a function of controlling the other receiving unit not to receive the selection input for the price payment method. Specifically, while the payment method selection screen is being displayed on either the first touch panel 32 or the second touch panel 34, the control unit 93 controls the other touch panel not to display the payment method selection screen. For example, when the payment method selection screen is being displayed on the second touch panel 34, the control unit 93 controls the first touch panel 32 not to display the payment method selection screen. In addition, selection input for the price payment method by input of a key disposed on the keyboard 31 is also not received. The control unit 93 waits for a display switching operation by the store clerk. Upon detecting a switching operation, the control unit 93 causes the first touch panel 32 to display the payment method selection screen, and deletes the payment method selection screen from the second touch panel 34. The control unit 93 receives the selection input for the price payment method by the input of the key disposed on the keyboard 31.

The notification unit 94 has a function of notifying the customer that the store clerk is in operation while the first receiving unit 91 is receiving the selection input for the price payment method. Specifically, if the payment method selection screen is displayed on the first touch panel 32, the notification unit 94 switches the screen of the second touch panel 34 to a screen for notifying the customer that the store clerk is in operation. The notification unit 94 may notify the customer that the store clerk is in operation by voice.

With the functions described above, the processor 61 of the settlement device 3 acts as described below. That is, while the second receiving unit 92 is receiving the selection input for the price payment method, the first receiving unit 91 does not receive the selection input for the price payment method. Therefore, the selection input for the price payment method is limited to the operation of the customer. On the other hand, while the first receiving unit 91 is receiving the selection input for the price payment method, the second receiving unit 92 does not receive the selection input for the price payment method. Therefore, the selection input for the price payment method is limited to the operation of the store clerk. In addition, while the store clerk is in operation, the notification unit 94 notifies the customer that the store clerk is in operation. Therefore, the customer can easily know that the store clerk is in operation.

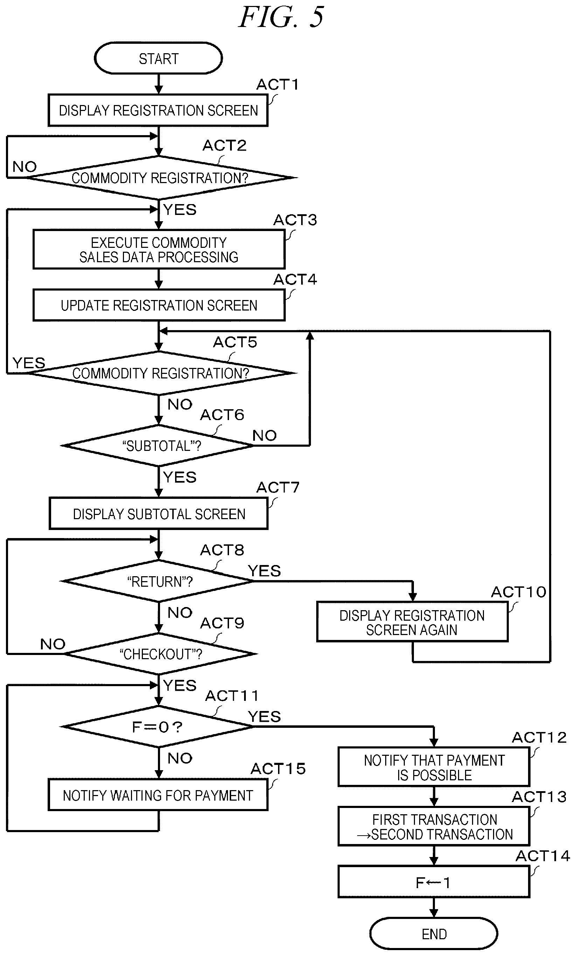

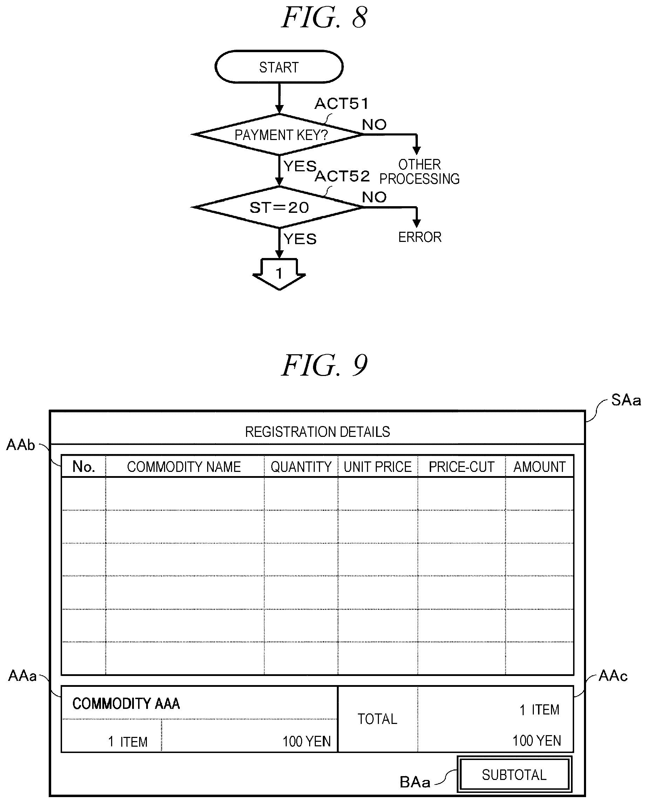

The functions of the first receiving unit 91, the second receiving unit 92, the control unit 93, and the notification unit 94 are implemented by information processing executed by the processor 61 according to a job program. Therefore, subsequently, a procedure of main information processing is described with reference to flowcharts of FIG. 5 to FIG. 8 and screen examples shown in FIG. 9 to FIG. 22. Note that the procedure described below is an example. The procedure can be changed as appropriate as long as the same effects can be achieved. The screen examples are also examples. Content of text to be output, arrangement of an image, types and layouts of software keys, and the like can be changed as appropriate.

Incidentally, the job program is a kind of the application programs stored in the main memory 62 or the auxiliary storage device 63. A method of installing the job program in the main memory 62 or the auxiliary storage device 63 is not particularly limited. The job program can be installed in the main memory 62 or the auxiliary storage device 63 by recording the job program in a removable recording medium or distributing the job program by communication via a network. A form of the recording medium does not matter as long as the recording medium can store a program and can be read by a device, such as a CD-ROM, or a memory card.

### [Description of Information Processing of Settlement Device]

### <First Information Processing>

FIG. 5 is a flowchart showing aspects of first information processing executed by the processor 61 of the settlement device 3 according to the job program. After walking around the sales floor and collecting purchase commodities, the customer moves to the checkout place. The customer places the purchase commodities on the checkout counter 4 of the checkout lane PA not occupied. If the customer comes to the checkout place, the store clerk standing in the space SP touches, for example, a start button of the touch panel 23. This operation is a command for an input start in the input device 2. In other words, the operation is a command for a registration start in the settlement device 3. In response to the command, the processor 61 starts the first information processing of the procedure shown in the flowchart of FIG. 5. In ACT 1, the processor 61 sets screens on the touch panel 23 and the display 25 in the input device 2 as registration screens.

FIG. 9 is an example of a registration screen SAa displayed on the touch panel 23. The registration screen SAa is divided into a current area AAa, a details area AAb, and a total area AAc. The current area AAa is an area for displaying a commodity name, a purchase quantity, and a sales amount of the latest purchased commodity. The details area AAb is an area in which commodity names, purchase quantities, unit prices, price-cut amounts, and sales amounts of purchase commodities in one transaction are displayed in a list format in order of a series of numbers. The total area AAc is an area in which a total of the purchase quantities and a total of the sales amounts of the purchase commodities in one transaction are displayed. The registration screen SAa includes a subtotal button BAa. The subtotal button BAa is a software key. The subtotal button BAa is for instructing subtotal output of purchase commodities registered by the settlement device 3 as one transaction.

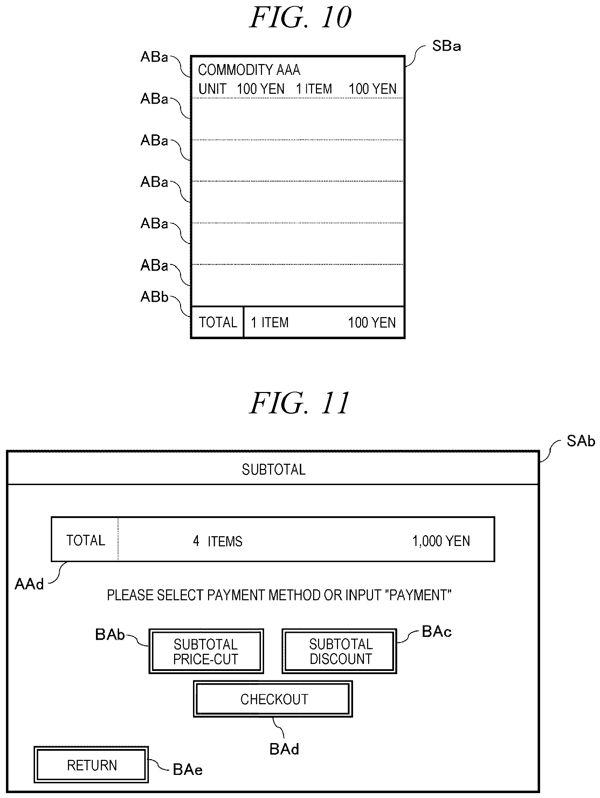

FIG. 10 is an example of a registration screen SBa displayed on the display 25. In the registration screen SBa, a screen is divided into a plurality of rows (seven rows in the example shown in FIG. 10), a first row to the immediately preceding row of a last row are set as rows of the details area ABa, and the last row is set as a row of the total area ABb. In the rows of the details area ABa, commodity names, unit prices, purchase quantities, and sales amounts of purchase commodities are displayed one by one. In the total area ABb, a total of the purchase quantities and a total of the sales amount are displayed in one row.

After checking the registration screen SAa, the store clerk inputs, to the input device 2, information on a purchase commodity placed on the checkout counter 4. That is, the store clerk scans, with the stationary scanner 21 or the handy scanner 22 of the input device 2, a barcode attached to the purchase commodity. The barcode is scanned, whereby a commodity code of the purchase commodity is supplied to the settlement device 3 via the input device interface 71. Note that, if a barcode is not attached to the commodity, the store clerk may cause the touch panel 23 of the input device 2 to display a list of commodities without barcodes. The store clerk then selects the purchase commodity out of the list. By such an operation, the commodity code of the purchase commodity without a barcode may be input to the settlement device 3 via the input device interface 71.

The description returns to FIG. 5.

After setting the screens of the touch panel 23 and the display 25 as the registration screen SAa and the registration screen SBa, the processor 61 proceeds to ACT 2. In ACT 2, the processor 61 waits for information necessary for registration of the purchase commodity to be input. When the commodity code is input from the input device 2 via the input device interface 71, the processor 61 determines that the information necessary for registration of the purchase commodity has been input. The processor 61 proceeds from ACT 2 to ACT 3. In ACT 3, the processor 61 executes commodity sales data processing. This processing is processing for reading, from the commodity master, a commodity name, a unit price, and the like of the commodity specified by the input commodity code, generating sales data of the purchase commodity including the commodity code, the commodity name, the unit price, a purchase quantity, and a sales amount, and writing the sales data in the first transaction file 81, that is, registering the sales data.

After finishing the commodity sales data processing, the processor 61 proceeds to ACT 4. In ACT 4, the processor 61 updates the registration screen SAa and the registration screen SBa.

Concerning the registration screen SAa, the processor 61 displays, in the current area AAa, the commodity name, the purchase quantity, and the sales amount of the sales data written in the first transaction file 81. At this time, if sales data of a purchase commodity is displayed in the current area AAa, the processor 61 displays, in the details area AAb, a commodity name, a purchase quantity, a unit price, a price-cut amount, and a sales amount of the sales data. The processor 61 displays, in the total area AAc, totals of purchase quantities and sales amounts of all sales data stored in the first transaction file 81.

Concerning the registration screen SBa, the processor 61 displays, in a first row of the details area ABa, the commodity name, the unit price, the purchase quantity, and the sales amount of the sales data written in the first transaction file 81. At this time, if the sales data is displayed in the first row of the details area ABa, the processor 61 sequentially shifts data in the first row and the subsequent rows to a second row and the subsequent rows, and then displays, in the first row, the sales data written in the first transaction file 81. The processor 61 displays, in the total area ABb, totals of purchase quantities and sales amounts of all sales data stored in the first transaction file 81.

After updating the registration screen SAa and the registration screen SBa, the processor 61 proceeds to ACT 5. In ACT 5, the processor 61 checks whether information about the next purchase commodity is input to the input device 2. If the information about the next purchase commodity is not input, the processor 61 checks, in ACT 6, whether the subtotal button BAa is selected. If the subtotal button BAa is not input, the processor 61 returns to ACT 5. As described above, in ACT 5 and ACT 6, the processor 61 waits for information on the next purchase commodity to be input or the subtotal button BAa to be selected.

If information about a purchase commodity is input in the waiting state in ACT 5 and ACT 6, the processor 61 returns to ACT 3. The processor 61 executes the processing in ACT 3 and ACT 4 in the same manner as described above.

Therefore, the store clerk operates the stationary scanner 21, the handy scanner 22, or the touch panel 23 of the input device 2 and inputs information on purchase commodities placed on the checkout counter 4 item by item, whereby sales data of the purchase commodities is stored in the first transaction file 81. The registration screen SAa and the registration screen SBa are updated. Upon finishing the operation for inputting the information about the purchase commodity to the input device 2, the store clerk touches the subtotal button BAa.

When the subtotal button BAa is selected by a touch operation of the store clerk in the waiting state in ACT 5 and ACT 6, the processor 61 proceeds to ACT 7. In ACT 7, the processor 61 sets a screen of the touch panel 23 in the input device 2 as a subtotal screen SAb (see FIG. 11).

FIG. 11 is an example of the subtotal screen SAb displayed on the touch panel 23. The subtotal screen SAb includes a total area AAd in which a total of purchase quantities of purchase commodities and a total of sales amounts in one transaction are displayed. The subtotal screen SAb includes a subtotal price-cut button BAb, a subtotal discount button BAc, a checkout button BAd, and a return button BAe. The buttons BAb, BAc, BAd, and BAe are software keys, respectively. The subtotal price-cut button BAb is for instructing a price-cut of a total amount. The subtotal discount button BAc for instructing a discount of a total amount. The checkout button BAd is for instructing a finishing of input of purchase commodity information. The return button BAe is for instructing a return to purchase commodity information input (e.g., register more items in the transaction).

After checking the subtotal screen SAb, the store clerk checks whether there are any unregistered items left on the checkout counter 4. If an unregistered item is present, the store clerk touches the return button BAe.

On the other hand, if there are no more remaining items, the store clerk next checks whether a transaction may be a subtotal price-cut target transaction or a subtotal discount target transaction. For example, if the customer presents a coupon for a subtotal price-cut, the transaction is a subtotal price-cut target transaction. The store clerk selects the subtotal price-cut button BAb and inputs a price-cut amount with a numerical keypad of the keyboard 24 or the like. The total amount due in the transaction is reduced (cut) by the operation described above. Such processing is referred to as subtotal price-cut processing. Similarly, if the customer presents a coupon for a subtotal discount, the transaction is a subtotal discount target transaction. The store clerk selects the subtotal discount button BAc and inputs a discount rate by using the numerical keypad of the keyboard 24. The total amount is discounted by the operation described above. Such processing is referred to as subtotal discount processing.

When there is no unregistered commodity present and a subtotal price-cut or a subtotal discount is unnecessary, the store clerk touches the checkout button BAd.

The description returns to FIG. 5.

After setting the screen of the touch panel 23 as the subtotal screen SAb, the processor 61 proceeds to ACT 8. In ACT 8, the processor 61 checks whether the return button BAe is selected. If the return button BAe is not selected, the processor 61 proceeds to ACT 9. In ACT 9, the processor 61 checks whether the checkout button BAd is selected. If the checkout button BAd is not selected, the processor 61 returns to ACT 8. As described above, in ACT 8 and ACT 9, after displaying the subtotal screen SAb, the processor 61 waits for the return button BAd to be selected or the checkout button BAd to be selected.

Note that, if the subtotal price-cut button BAb or the subtotal discount button BAc is selected in the waiting state in ACT 8 or ACT 9, the processor 61 performs the subtotal price-cut processing or the subtotal discount processing described above. Thereafter, the processor 61 returns to the waiting state in ACT 8 and ACT 9.

When the return button BAd is selected by the touch operation of the store clerk in the waiting state in ACT 8 and ACT 9, the processor 61 proceeds from ACT 8 to ACT 10. In ACT 10, the processor 61 returns the screen of the touch panel 23 to the immediately preceding registration screen SAa. The processor 61 returns to the waiting state in ACT 5 and ACT 6. Therefore, the store clerk only has to operate the stationary scanner 21, the handy scanner 22, or the touch panel 23 of the input device 2 and input the information on the purchase commodity that is not input.

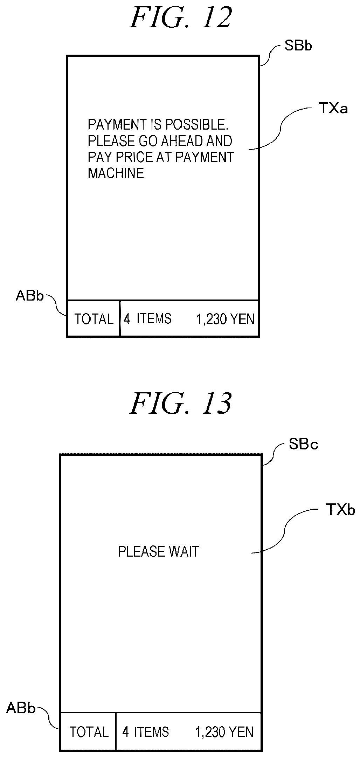

When the checkout button BAd is selected by the touch operation of the store clerk in the waiting state in ACT 8 and ACT 9, the processor 61 proceeds from ACT 9 to ACT 11. In ACT 11, the processor 61 checks the payment-in-progress flag F. If the payment operation has not been performed in the settlement device 3, the payment-in-progress flag F is reset to "0". After the payment-in-progress flag F is reset to "0", the processor 61 proceeds from ACT 11 to ACT 12. In ACT 12, the processor 61 sets the screen of the display 25 as a first notification screen SBb (see FIG. 12).

FIG. 12 is an example of the first notification screen SBb displayed on the display 25. The first notification screen SBb displays first text TXa together with information on the total area ABb in the registration screen SBa. The first text TXa is text including content for instructing the customer to move to a payment machine because a price can be paid. After checking the first text TXa, the customer moves in a direction in which the payment machine, that is, the settlement device 3 is installed and pays the price.

The description returns to FIG. 5.

After displaying the first notification screen SBb on the display 25, the processor 61 proceeds to ACT 13. In ACT 13, the processor 61 copies data stored in the first transaction file 81, that is, sales data of purchase commodities registered as one transaction to the second transaction file 82. In ACT 14, the processor 61 sets the payment-in-progress flag F of the flag memory 83 to "1". Then, the processor 61 ends the first information processing related to a transaction with a first customer.

Subsequently, the processor 61 starts the first information processing related to a transaction with a second customer. That is, the processor 61 executes the processing in ACT 1 and subsequent acts in the same manner as described above. At this time, the payment-in-progress flag F set to" 1" in ACT 14 of the first information processing for the first customer may not be reset to "0" at a point in time of ACT 11 of the first information processing for the second customer.

After the payment-in-progress flag F is set to "1" in ACT 11, the processor 61 proceeds from ACT 11 to ACT 15. In ACT 15, the processor 61 sets the screen of the display 25 as a second notification screen SBc (see FIG. 13).

FIG. 13 is an example of the second notification screen SBc displayed on the display 25. The second notification screen SBc displays second text TXb together with information on the total area ABb in the registration screen SBa. The second text TXb is text including content for instructing the customer to wait because a price cannot be paid. After checking the second text TXb, the second customer waits until payment of a price becomes possible.

The description returns to FIG. 5.

After displaying the second notification screen SBc on the display 25, the processor 61 returns to ACT 11. In ACT 11, the processor 61 waits for the payment-in-progress flag F to be reset to "0". The payment-in-progress flag F is reset to "0" if settlement processing is finished in second information processing described below. If the payment-in-progress flag F is reset to "0", the processor 61 proceeds from ACT 11 to ACT 12. The processor 61 executes the processing in ACT 12 to ACT 14 in the same manner as described above. That is, the processor 61 displays the first notification screen SBb on the display 25. According to this display, the second customer moves in a direction in which the settlement device 3 is installed and pays a price.

The processor 61 copies data stored in the first transaction file 81 to the second transaction file 82. The processor 61 sets the payment-in-progress flag F to "1" and ends the first information processing for the second customer. Thereafter, the processor 61 subsequently and repeatedly executes the first information processing for a third customer, a fourth customer,....

### <Second Information Processing>

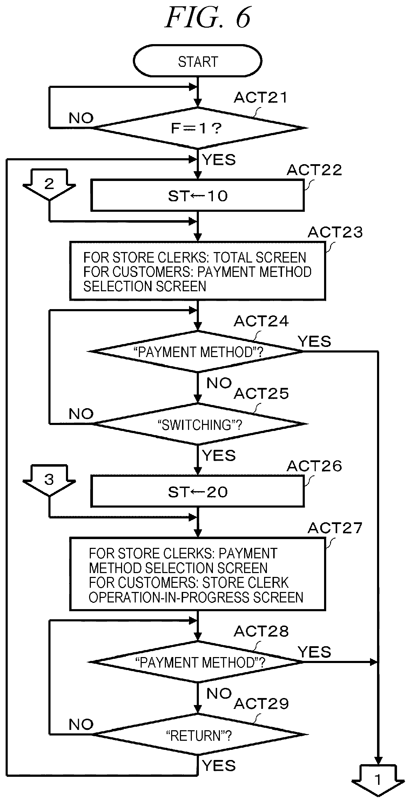

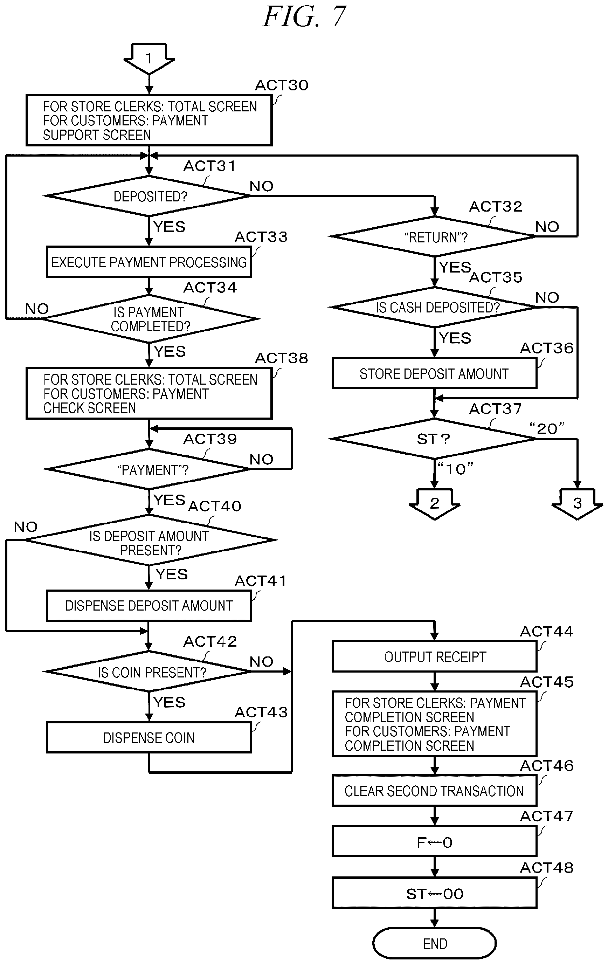

FIG. 6 and FIG. 7 are flowcharts showing aspects of second information processing executed by the processor 61 of the settlement device 3 according to the job program. The processor 61 executes the second information processing in parallel with the first information processing described above.

In ACT 21, the processor 61 waits for the payment-in-progress flag F to be set to "1". Note that, in this waiting state, initial screens are displayed on the first touch panel 32 and the second touch panel 34. Contents of the initial screens are not particularly limited. For example, the initial screen displayed on the first touch panel 32 is a screen having the same layout as a layout of a total screen SCa to be described below. No information is displayed on the initial screen. The initial screen displayed on the second touch panel 34 is, for example, a screen on which text such as "Welcome" or an image is displayed. Alternatively, nothing may be displayed on the initial screen.

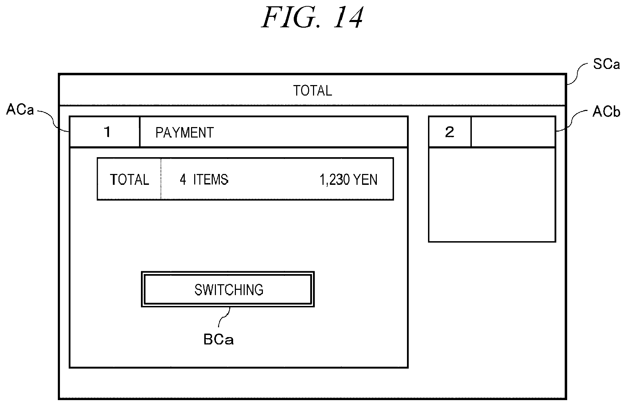

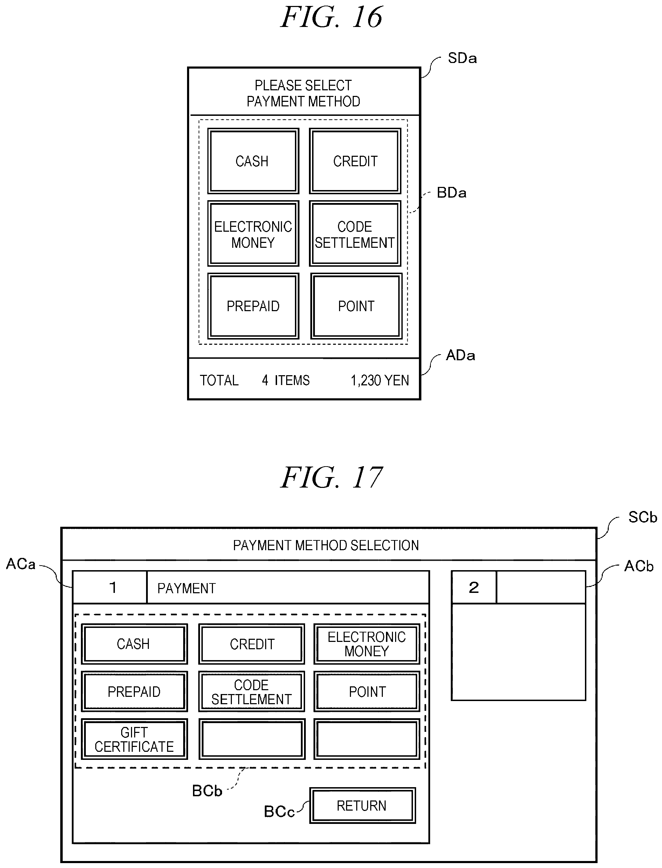

After the payment-in-progress flag F is set to " 1" in ACT 14 of the first information processing, the processor 61 proceeds from ACT 21 to ACT 22. In ACT 22, the processor 61 sets the payment status ST to "10". In ACT 23, the processor 61 sets a screen of the first touch panel 32, which is the display unit for store clerks, as the total screen SCa (see FIG. 14), and sets a screen of the second touch panel 34, which is the display unit for customers, as a payment method selection screen SDa (see FIG. 16).

FIG. 14 is an example of the total screen SCa displayed on the first touch panel 32. The total screen SCa includes a first customer area ACa and a second customer area ACb. The first customer area ACa is an area for displaying information on the first customer who is about to pay a price. A total number of items and a total amount of the first customer are displayed in the first customer area ACa. That is, a total of purchase quantities and a total of sales amounts calculated based on the sales data of the purchase commodities stored in the second transaction file 82 are displayed in the first customer area ACa. A switching button BCa is displayed in the first customer area ACa. The switching button BCa is a software key. The switching button BCa is for declaring that the store clerk intervenes in a payment operation.

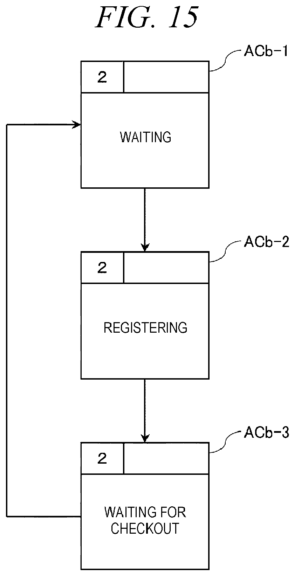

The second customer area ACb is an area for displaying information on the second customer. An example of the information displayed in the second customer area ACb is shown in FIG. 15. FIG. 15 is a schematic diagram showing a transition example of the information displayed in the second customer area ACb.

While information input for a commodity to be purchased by the second customer has not started yet at the input device 2, "waiting" is displayed as shown in a second customer area ACb-1. If the information input for the commodity to be purchased by the second customer has started, "registering" is displayed as shown in a second customer area ACb-2. After the information input for the commodity to be purchased by the second customer is completed, "waiting for checkout" is displayed as shown in a second customer area ACb-3. Thereafter, if checkout for the first customer has completed and shifted to checkout for the second customer, the display returns to "waiting" as shown in the second customer area ACb-1. Note that, in some example, nothing might be displayed in the second customer area ACb-1.

FIG. 16 is an example of the payment method selection screen SDa displayed on the second touch panel 34. The payment method selection screen SDa includes a payment method selection button group BDa. The payment method selection button group BDa includes a cash button, a credit button, an electronic money button, a code settlement button, a prepaid button, and a point button. All of the cash button, the credit button, the electronic money button, the code settlement button, the prepaid button, and the point button are software keys.

The payment method selection screen SDa includes a total area ADa. A total number of items and a total amount of a customer about to make payment are displayed in the total area ADa. That is, a total of purchase quantities and a total of sales amounts calculated based on the sales data of the purchase commodities stored in the second transaction file 82 are displayed in the total area ADa.

After checking the payment method selection screen SDa, the customer touches a button of a desired payment method out of the payment method selection button group BDa. For example, a customer desiring to pay by cash touches the cash button. A customer desiring to pay by a credit card touches the credit button. A customer desiring to pay by electronic money touches the electronic money button. A customer desiring to pay by code settlement touches the code settlement button. A customer desiring to pay by a prepaid card touches the prepaid button. A customer desiring to pay by a cumulative points touches the point button.

The description returns to FIG. 6.

After setting the screen of the first touch panel 32 as the total screen SCa and setting the screen of the second touch panel 34 as the payment method selection screen SDa, the processor 61 proceeds to ACT 24. In ACT 24, the processor 61 checks whether one button of the payment method selection button group BDa displayed on the payment method selection screen SDa is selected. If a button of the payment method selection button group BDa is not selected, the processor 61 proceeds to ACT 25. In ACT 25, the processor 61 checks whether the switching button BCa displayed on the total screen SCa is selected. When the switching button BCa on the total screen SCa is not selected, the processor 61 returns to ACT 24. As described above, in ACT 24 and ACT 25, the processor 61 waits for a button of the payment method selection button group BDa in the payment method selection screen SDa to be selected or the switching button BCa of the total screen SCa to be selected.

If a button of the payment method selection button group BDa is selected by a touch operation of the customer in the waiting state in ACT 24 and ACT 25, the processor 61 proceeds from ACT 24 to ACT 30 in FIG. 7. Processing in ACT 30 and subsequent acts will be described below.

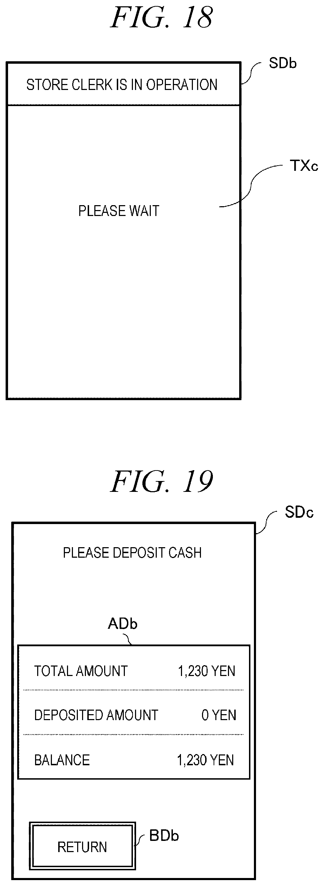

On the other hand, if the switching button BCa is selected by a touch operation of the store clerk in the waiting state in ACT 24 and ACT 25, the processor 61 proceeds from ACT 25 to ACT 26. In ACT 26, the processor 61 sets the payment status ST to "20". In ACT 27, the processor 61 sets the screen of the first touch panel 32 to a payment method selection screen SCb (see FIG. 17) and sets the screen of the second touch panel 34 to a store clerk operation-in-progress screen SDb (see FIG. 18).

FIG. 17 is an example of the payment method selection screen SCb displayed on the first touch panel 32. In the payment method selection screen SCb, a payment method selection button group BCb and a return button BCc are disposed in the first customer area ACa of the total screen SCa. The second customer areaACb of the total screen SCa is displayed in the same manner on the payment method selection screen SCb.

The payment method selection button group BCb includes a gift certificate button in addition to the cash button, the credit button, the electronic money button, the code settlement button, the prepaid button, and the point button described above. The gift certificate button is also a software key. If a price is paid by a gift certificate, the store clerk needs to intervene in order to check validity of the gift certificate. Therefore, the gift certificate button is not included in the payment method selection screen SDa of the second touch panel 34, the operator of which is the customer. However, the gift certificate button is included in the payment method selection screen SCb of the first touch panel 32, the operator of which is the store clerk. The return button BCc is a software key. The return button BCc is for declaring to return the payment method selection screen SCb to the immediately preceding screen, that is, the total screen SCa.

FIG. 18 is an example of the store clerk operation-in-progress screen SDb displayed on the second touch panel 34. As shown in FIG. 18, third text TXc for notifying the customer that the store clerk is in operation is displayed on the store clerk operation-in-progress screen SDb. Note that an image indicating that the store clerk is in operation may be displayed instead of the third text TXc. Alternatively, the third text TXc and the image may be displayed together. In short, it is sufficient if the customer can be notified that the store clerk is in operation.

The description returns to FIG. 6.

After setting the screen of the first touch panel 32 as the payment method selection screen SCb and setting the screen of the second touch panel 34 as the store clerk operation-in-progress screen SDb, the processor 61 proceeds to ACT 28. In ACT 28, the processor 61 checks whether one button of the payment method selection button group BCb displayed on the payment method selection screen SCb is selected. If a button of the payment method selection button group BCb is not selected, the processor 61 proceeds to ACT 29. In ACT 29, the processor 61 checks whether the return button BCc of the payment method selection screen SCb is selected. If the return button BCc is not selected either, the processor 61 returns to ACT 28. As described above, in ACT 28 and ACT 29, the processor 61 waits for a button of the payment method selection button group BCb to be selected or the return button BCc to be selected.

When a button of the payment method selection button group BCb is selected by the touch operation of the store clerk in the waiting state in ACT 28 and ACT 29, the processor 61 proceeds from ACT 28 to ACT 30 in FIG. 7. Processing in ACT 30 and subsequent acts will be described below.

On the other hand, if the return button BCc is selected by the touch operation of the store clerk in the waiting state in ACT 28 and ACT 29, the processor 61 returns from ACT 29 to ACT 22. That is, the processor 61 sets the payment status ST to "10". The processor 61 sets the screen of the first touch panel 32 as the total screen SCa and sets the screen of the second touch panel 34 as the payment method selection screen SDa. The processor 61 waits for a button of the payment method selection button group BDa in the payment method selection screen SDa to be input or the switching button BCa of the total screen SCa to be input.

If a button of the payment method selection button group BDa displayed on the second touch panel 34 is selected by the touch operation of the customer in ACT 24 or a button of the payment method selection button group BCb displayed on the first touch panel 32 is selected by the touch operation of the store clerk in ACT 28, the processor 61 proceeds to ACT 30 in FIG. 7. In ACT 30, the processor 61 sets the screen of the first touch panel 32 to the total screen SCa (see FIG. 14) and sets the screen of the second touch panel 34 to a payment support screen SDc (see FIG. 19).

FIG. 19 is an example of the payment support screen SDc displayed on the second touch panel 34. FIG. 19 shows the payment support screen SDc displayed if the cash button of the payment method selection button group BDa or the payment method selection button group BCb is selected. The payment support screen SDc includes a coin machine information area ADb. A return button BDb is disposed on the payment support screen SDc.

A total amount, a deposited amount, that is, an amount of cash deposited to the automatic coin machine 36, a balance obtained by subtracting the deposited amount from the total amount are displayed in the coin machine information area ADb. The return button BDb is a software key. The return button BDb is for instructing to suspend payment by a selected payment method and return the settlement device 3 to the state before the payment method selection.

The description returns to FIG. 7.

After setting the screen of the first touch panel 32 as the total screen SCa and setting the screen of the second touch panel 34 as the payment support screen SDc, the processor 61 proceeds to ACT 31. In ACT 31, the processor 61 checks whether a price is deposited. If the price is not deposited, the processor 61 proceeds to ACT 32. In ACT 32, the processor 61 checks whether the return button BDb is selected. If the return button BDb is not selected, the processor 61 returns to ACT 31. As described above, in ACT 31 and ACT 32, the processor 61 waits for a transaction price to be deposited or the return button BDb to be input.

After selecting the cash payment as the price payment method, the customer deposits cash to the automatic coin machine 36. After selecting the credit card payment, the customer causes a reader of the cashless settlement terminal 37 to read data of a credit card. After selecting the electronic money payment, the customer causes the reader of the cashless settlement terminal 37 to read data of an electronic money medium. After selecting the code settlement payment, the customer causes a scanner of the cashless settlement terminal 37 to read a barcode for code settlement or a two-dimensional data code. The customer desiring the prepaid card payment causes the reader of the cashless settlement terminal 37 to read data of a prepaid card. The customer desiring the point payment causes the reader of the cashless settlement terminal 37 to read data of a point card. If the payment operation by the customer described above is performed, in ACT 31, the processor 61 determines that the transaction price has been deposited.

After determining that the price has been deposited, the processor 61 proceeds from ACT 31 to ACT 33. In ACT 33, the processor 61 executes payment processing. For example, if the cash payment is selected, the processor 61 deducts an amount of cash deposited to the automatic coin machine 36 from the total amount. If the credit card payment is selected, the processor 61 authenticates a credit card. If the electronic money payment is selected, the processor 61 deducts the total amount from the balance of electronic money. If the code settlement payment is selected, the processor 61 deducts the total amount from the balance of code settlement. If the prepaid card payment is selected, the processor 61 deducts the total amount from the balance of a prepaid card. If the point payment is selected, the processor 61 deducts the total amount from an amount equivalent to a cumulative point.

After executing the payment processing, the processor 61 proceeds to ACT 34. In ACT 34, the processor 61 determines whether the payment has been completed. For example, if the amount of the cash deposited to the automatic coin machine 36 is insufficient for the total amount, the processor 61 determines that the payment is incomplete. Similarly, if failing in authenticating the credit card or if the balance of the electronic money, the code settlement, the prepaid card, the cumulative point, or the like is insufficient for the total amount, the processor 61 determines that the payment is incomplete. If the payment is incomplete, the processor 61 returns to ACT 31. In ACT 31 and ACT 32, the processor 61 waits again for the transaction price to be deposited or the return button BDb to be selected.

While the payment is incomplete, that is, in the waiting state in ACT 31 and ACT 32, the customer can change the payment method to another method. For example, if the cash payment is selected but cash on hand is insufficient, the customer can change the payment method to a payment method other than the cash. The customer desiring to change the payment method to another payment method touches the return button BDb.

After the return button BDb is selected by the touch operation of the customer in the waiting state in ACT 31 and ACT 32, the processor 61 proceeds from ACT 32 to ACT 35. In ACT 35, the processor 61 checks whether the return button BDb was selected after cash was deposited to the automatic coin machine 36. If the return button BDb is selected after the cash is deposited to the automatic coin machine 36, the processor 61 proceeds to ACT 36. In ACT 36, the processor 61 stores the amount (deposit amount) of the cash deposited to the automatic coin machine 36 in the main memory 62. If cash is not deposited to the automatic coin machine 36 and the return button BDb is selected, the processor 61 skips the processing in ACT 36.

After executing or skipping the processing in ACT 36, the processor 61 proceeds to ACT 37. In ACT 37, the processor 61 checks the status ST. Note that, at this point in time, the status ST is "10" or "20".

If the status ST is "10", the processor 61 returns to ACT 23 in FIG. 6. That is, the processor 61 sets the screen of the first touch panel 32 to the total screen SCa (see FIG. 14) and sets the screen of the second touch panel 34 to the payment method selection screen SDa (see FIG. 16). As described above, when the customer touches the return button BDb and the status ST is "10", the payment method selection screen SDa is displayed on the second touch panel 34. Therefore, the customer only has to select a button of a desired payment method out of the payment method selection button group BDa again.

On the other hand, if the status ST is "20", the processor 61 returns to ACT 27 in FIG. 6. That is, the processor 61 sets the screen of the first touch panel 32 to the payment method selection screen SCb (see FIG. 17) and sets the screen of the second touch panel 34 to the store clerk operation-in-progress screen SDb (see FIG. 18). As described above, if the customer touches the return button BDb if the status ST is "20", the payment method selection screen SCb is displayed on the first touch panel 32. Therefore, the store clerk only has to touch the button of the payment method desired by the customer out of the payment method selection button group BCb again.

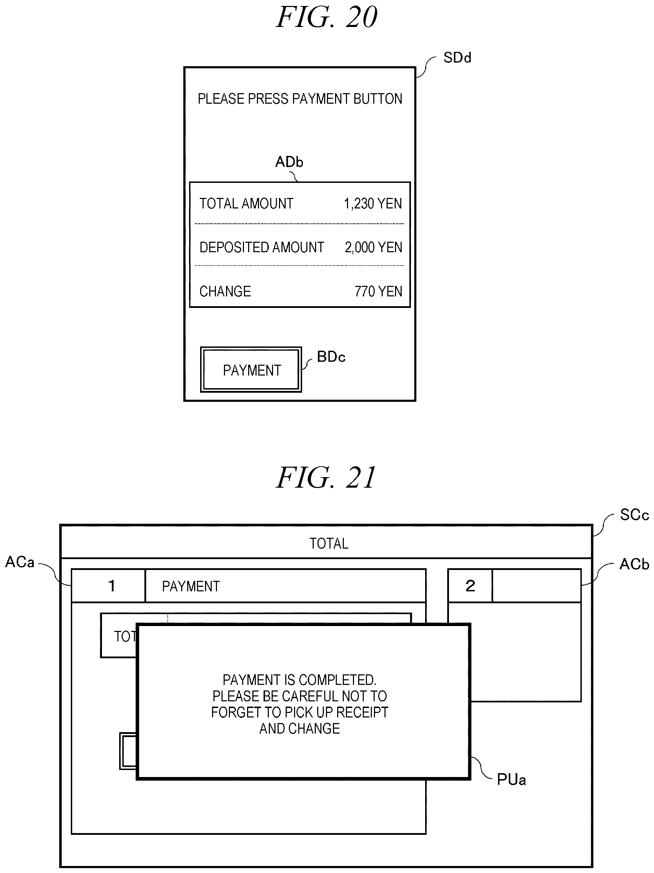

After recognizing in ACT 34 that the payment is completed, the processor 61 proceeds to ACT 38. In ACT 38, the processor 61 sets the screen of the first touch panel 32 to the total screen SCa (see FIG. 14) and sets the screen of the second touch panel 34 to a payment check screen SDd (see FIG. 20).

FIG. 20 is an example of the payment check screen SDd displayed on the second touch panel 34. FIG. 20 shows the payment check screen SDd when the cash button of the payment method selection button group BDa or the payment method selection button group BCb is selected. The payment check screen SDd includes the coin machine information area ADb. In the coin machine information area ADb, a difference obtained by subtracting the deposited amount from the total amount is displayed as a balance on the payment support screen SDc, but a difference obtained by subtracting the total amount from the deposited amount is displayed as a change due amount on the payment check screen SDd. A payment button BDc is disposed on the payment check screen SDd. The return button BDb disposed on the payment support screen SDc is not disposed on the payment support screen SDc. The payment button BDc is for declaring that the payment is completed. After finishing the payment of the price, the customer touches the payment button BDc.

The description returns to FIG. 7.

After setting the screen of the first touch panel 32 as the total screen SCa and setting the screen of the second touch panel 34 as the payment check screen SDd, the processor 61 proceeds to ACT 39. In ACT 39, the processor 61 waits for the payment button BDc to be input. If the payment button BDc is selected by the touch operation of the customer, the processor 61 proceeds to ACT 40. In ACT 40, the processor 61 checks whether a deposit amount is stored. If a deposit amount was stored in the processing in ACT 36, the processor 61 proceeds to ACT 41. In ACT 41, the processor 61 controls the automatic coin machine 36 such that cash equivalent to the deposit amount is dispensed. If a deposit amount was not stored in the processing in ACT 36, the processor 61 skips the processing in ACT 41.

After executing or skipping the processing in ACT 41, the processor 61 proceeds to ACT 42. In ACT 42, the processor 61 checks whether change back is required. If change is required because the cash payment was selected as the payment method and cash of an amount exceeding the total amount was deposited into the automatic coin machine 36, the processor 61 proceeds to ACT 43. In ACT 43, the processor 61 controls the automatic coin machine 36 such that cash equivalent to a change back amount is dispensed. If change is not required, the processor 61 skips the processing in ACT 43.

After executing or skipping the processing in ACT 43, the processor 61 proceeds to ACT 44. In ACT 44, the processor 61 controls output of a receipt. That is, the processor 61 generates, based on sales data and the like stored in the second transaction file 82, receipt data indicating details of a commercial transaction. The processor 61 outputs the receipt data to the printer 36. Consequently, the printer 35 operates, and a paper receipt is printed and dispensed. Note that, if an electronic receipt ID is supplied to the input device 2, the processor 61 transmits the receipt data to an electronic receipt server together with the electronic receipt ID. Consequently, the customer can acquire the receipt as an electronic receipt by operating a smartphone or the like.

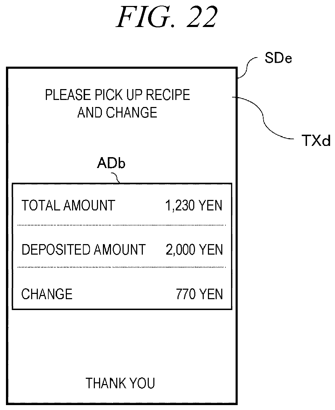

After outputting the receipt, the processor 61 proceeds to ACT 45. In ACT 45, the processor 61 sets the screen of the first touch panel 32 to a payment completion screen SCc (see FIG. 21) and sets the screen of the second touch panel 34 to a payment completion screen SDe (see FIG. 22).

FIG. 21 is an example of the payment completion screen SCc displayed on the first touch panel 32. In the payment completion screen SCc, a pop-up window PUa for notifying the store clerk that the payment is completed is displayed over the total screen SCa. If the pop-up window PUa is displayed, the store clerk recognizes that the payment of the customer is completed in the settlement device 3.

FIG. 22 is an example of the payment completion screen SDe displayed on the second touch panel 34. FIG. 22 shows the payment completion screen SDe displayed if the cash button of the payment method selection button group BDa or the payment method selection button group BCb is select. The payment completion screen SDe displays, together with the coin machine information area ADb, fourth text TXd for informing the customer not to forget to pick up the receipt and the change. Note that, if the receipt is dispensed as the electronic receipt, the fourth text TXd is changed to, for example, "Please pick up the change. Please check the receipt on the electronic receipt". If a paper receipt is dispensed from the printer 35, after checking the content displayed on the payment completion screen SDe, the customer receives the paper receipt. If cash or change is dispensed from the automatic coin machine 36, the customer receives the cash/change.

The description returns to FIG. 7.

After setting the screen of the first touch panel 32 as the payment completion screen SCc and setting the screen of the second touch panel 34 as the payment completion screen SDe, the processor 61 proceeds to ACT 46. In ACT 46, the processor 61 clears the second transaction file 82. In ACT 47, the processor 61 resets the payment-in-progress flag F to "0". Further, in ACT 48, the processor 61 sets the payment status ST to "00". Then, the processor 61 ends the second information processing. Consequently, payment of a price of the first customer is processed in the settlement device 3. If the payment-in-progress flag F is set to "1" in ACT 14 in FIG. 5 again, the processor 61 repeatedly executes the second information processing described above. Consequently, payment of a price of the second customer is processed in the settlement device 3. Thereafter, payment of a price of a third customer, a fourth customer, ... is processed in order in the settlement device 3.

The processor 61 implements the function of the first receiving unit 91 with the processing in ACT 24. The processor 61 implements the function of the second receiving unit 92 with the processing in ACT 28. The processor 61 implements the function of the control unit 93 with the processing in ACT 23 and ACT 27. The processor 61 implements the function of the notification unit 94 with the processing in ACT 27.

### <Third Information Processing>

FIG. 8 is a flowchart showing aspects of third information processing executed by the processor 61 of the settlement device 3 according to the job program. The processor 61 executes the third information processing in parallel with the first information processing and the second information processing described above.

Upon detecting that the key disposed on the keyboard 31 is operated, the processor 61 starts the third information processing. In ACT 51, the processor 61 checks whether the operation key is a payment key. The payment key includes a plurality of hard keys to which various price payment methods such as cash, a credit card, and electronic money are respectively assigned. If the operation key is not a payment key, the processor 61 executes key input processing corresponding to the operation key. For example, if the operation key is a charge key, the processor 61 executes charge processing of electronic money.

If the operation key is a payment key, the processor 61 proceeds to ACT 52. In ACT 52, the processor 61 checks the payment status ST. Here, if the payment status ST is other than "20", that is, if the payment status ST is "00" or"10", the processor 61 sets the key input as an error. On the other hand, if the payment status ST is "20", the processor 61 proceeds to the processing in ACT 30 described in the second information processing.

As described above, if the payment status ST is "20", that is, the payment method selection screen SCb is displayed on the first touch panel 32 and the store clerk operation-in-progress screen SDb is displayed on the second touch panel 34, when the store clerk selects a payment key on the keyboard 31, the processor 61 sets the screen of the first touch panel 32 to the total screen SCa and the screen of the second touch panel 34 to the payment support screen SDc. Thereafter, as described in the second information processing, the processor 61 waits for a deposit according to the payment method corresponding to the payment key, outputs a receipt after the deposit is completed, and ends a commercial transaction with the customer.

On the other hand, when the payment status ST is "10", that is, when the total screen SCa is displayed on the first touch panel 32 and the payment method selection screen SDa is displayed on the second touch panel 34, the processor 61 sets the selection of the payment key on the keyboard 31 as an error. Therefore, even if the store clerk operates the payment key, the key operation is disabled.

Here, the processor 61 implements the function of the first receiving unit 91 with the processing in ACT 51. The processor 61 implements the function of the control unit 93 with the processing in ACT 52.

### [Description of Action Effect of Settlement Device]

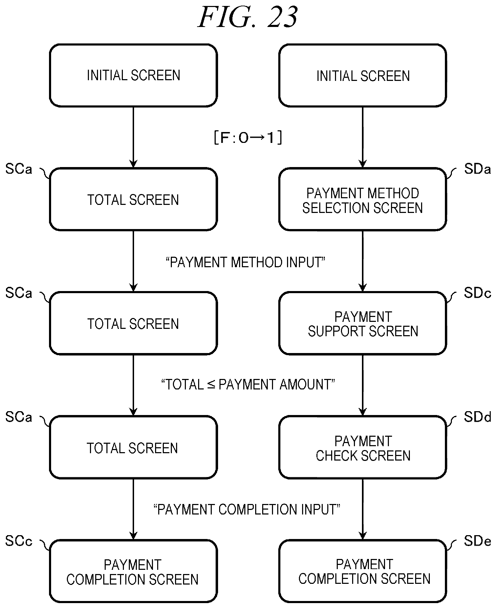

FIG. 23 shows transition of screens displayed on the first touch panel 32 and the second touch panel 34, respectively, in a case of the customer performing all payment operations by himself or herself. The transition of the screens shown in FIG. 23 is executed by the processor 61 controlling the first touch panel 32 and the second touch panel 34.

First, in a situation where the payment-in-progress flag F is "0", that is, the settlement processing is not performed in the settlement device 3, initial screens are displayed on the first touch panel 32 and the second touch panel 34, respectively.

When the checkout button BAd on the subtotal screen SAb displayed on the touch panel 23 is selected by the store clerk, the payment-in-progress flag F is set to "1". At this time, the screen of the first touch panel 32 transitions from the initial screen to the total screen SCa. The screen of the second touch panel 34 transitions from the initial screen to the payment method selection screen SDa. After moving to the vicinity of the settlement device 3, the customer searches for a button of a desired payment method from the payment method selection button group BDa displayed on the payment method selection screen SDa. Then, the customer touches the button.

If the button of the payment method selection button group BDa is selected, the screen of the second touch panel 34 transitions from the payment method selection screen SDa to the payment support screen SDc. The screen of the first touch panel 32 does not transition from the total screen SCa. After checking the payment support screen SDc, the customer performs a payment operation by the selected payment method according to the content displayed on the screen SDc. For example, if cash payment is selected, the customer deposits cash to the automatic coin machine 36.

As a result, if the payment of the price is completed, the screen of the second touch panel 34 transitions from the payment support screen SDc to the payment check screen SDd. The screen of the first touch panel 32 does not transition from the total screen SCa. After checking the payment check screen SDd, the customer touches the payment button BDc on the screen SDd. On the other hand, the store clerk can recognize that the customer is still paying the price since the screen of the first touch panel 32 does not change from the total screen SCa. If there is the next customer, the store clerk performs an information input operation of commodities to be purchased by the customer on the input device 2.

If the payment button BDc is selected, the screen of the second touch panel 34 transitions from the payment check screen SDd to the payment completion screen SDe. The screen of the first touch panel 32 also transitions from the total screen SCa to the payment completion screen SCc. After checking the payment completion screen SCc, the store clerk can recognize that the customer finishes the payment of the price.

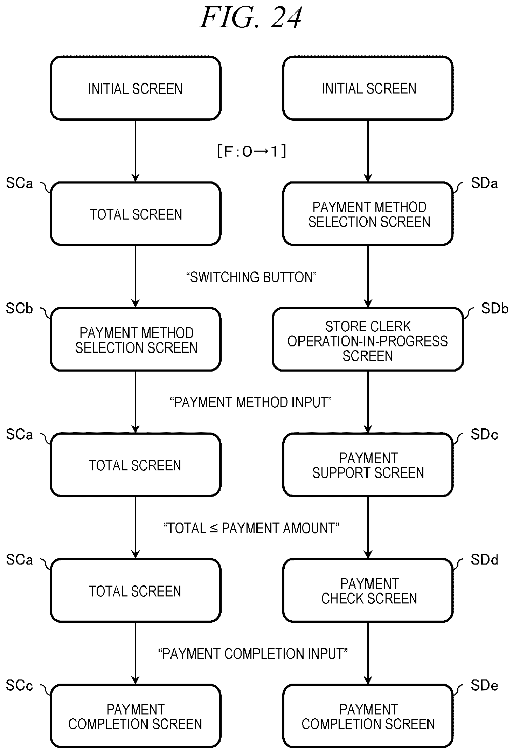

FIG. 24 is a diagram showing transition of screens of the first touch panel 32 and the second touch panel 34 in a case of the store clerk selecting a price payment method on behalf of the customer. The transition of the screens shown in FIG. 24 is also executed by the processor 61 controlling the first touch panel 32 and the second touch panel 34.

The screen can be the same as in FIG. 23 until the screen of the first touch panel 32 transitions from the initial screen to the total screen SCa and the screen of the second touch panel 34 transitions from the initial screen to the payment method selection screen SDa.

Here, for example, if the customer takes time to operate the payment method selection screen SDa, the store clerk touches the switching button BCa on the total screen SCa. Then, the screen of the first touch panel 32 transitions from the total screen SCa to the payment method selection screen SCb. The screen of the second touch panel 34 transitions from the payment method selection screen SDa to the store clerk operation-in-progress screen SDb. The store clerk checks the price payment method for the customer. The store clerk touches a button of the payment method designated by the customer from the payment method selection button group BDa displayed on the payment method selection screen SDa.

After the store clerk touches the button of the payment method, the screen of the first touch panel 32 transitions from the payment method selection screen SCb to the total screen SCa. The screen of the second touch panel 34 transitions from the store clerk operation-in-progress screen SDb to the payment support screen SDc. The customer performs the payment operation by the desired payment method according to the content displayed on the payment support screen SDc. Thereafter, similar to FIG. 23, the screens of the first touch panel 32 and the second touch panel 34 transition.

As shown in FIG. 23, if the payment method selection screen SDa is displayed on the second touch panel 34, the screen of the first touch panel 32 displays the total screen SCa. Therefore, the operation for selecting the payment method is now limited to the customer. If a payment method is selected, the screen of the second touch panel 34 transitions to the payment support screen SDc, and after the payment is completed, the screen of the second touch panel 34 transitions to the payment completion screen SDe. The customer can perform all payments according to the contents displayed on each screen sequentially.

On the other hand, if, as shown in FIG. 24, the store clerk touches the switching button BCa on the total screen SCa, the payment method selection screen SCb is displayed on the first touch panel 32. The screen of the second touch panel 34 transitions from the payment method selection screen SDa to the store clerk operation-in-progress screen SDb. The operation for selecting a payment method is now limited to the store clerk. At this time, since the screen of the second touch panel 34 is the store clerk operation-in-progress screen SDb, the customer can not operate the screen. Therefore, in a settlement device 3 that enables the customer to perform payment of a price by himself or herself, the store clerk can easily intervene in the payment of the price without confusion. Further, when the store clerk intervenes, the screen of the second touch panel 34 becomes the store clerk operation-in-progress screen SDb, and thus the customer can easily recognize that the store clerk is intervening.

In this case, a payment method can be selected using the payment key disposed on the keyboard 31. The input of the payment key is enabled only if the payment status ST is "20", that is, if the payment method selection screen SCb is displayed on the first touch panel 32. Therefore, if the customer is about to perform an operation for selecting a payment method, the store clerk will not erroneously input the payment key and attempt to select the payment method. Therefore, it is possible to provide a settlement device 3 that enables the customer to perform payment by himself or herself without causing trouble due to an erroneous operation by the store clerk.

### [Other Embodiments]

In the above embodiment, while the payment method selection screen SCb is being displayed on the first touch panel 32, the screen of the second touch panel 34 displays the store clerk operation-in-progress screen SDb. Regarding this point, the screen of the second touch panel 34 does not necessarily have to be the store clerk operation-in-progress screen SDb. For example, the payment method selection screen SDa may simply be deleted from the second touch panel 34. Similarly to described above, if the payment method selection screen SDa is deleted (e.g., a blank screen displayed), the customer can not erroneously operate the screen of second touch panel 34, and thus the store clerk can still easily intervene in payment of a price without confusion.

The settlement device 3 shown in FIG. 1 generates sales data and registers commodities for purchase based on the commodity code or the like which is input via the input device 2. As other possible types of settlement devices, a keyboard 31, a first touch panel 32, or a handy scanner 33 with the store clerk as an operator may be used as the input device. Information about a purchase commodity such as a commodity code is received via the input device, and sales data of the purchase commodity is generated based on the information. On the other hand, as in the above embodiment, the customer himself or herself may operate the second touch panel 34, the printer 35, the automatic coin machine 36, and/or the cashless settlement terminal 37 to make deposits necessary for settlement of the transaction. That is, a settlement device of a type called a face-to-face type POS terminal or the like may be used.

While certain embodiments have been described, these embodiments have been presented as examples, and are not intended to limit the scope of the embodiments. Such new embodiments can be implemented in other various forms, and various omissions, replacements, and changes can be made without departing from the scope of the disclosure. These embodiments and the modifications thereof are included in the scope of the disclosure and are also included in the disclosure described in the claims.

## Claims

1. A settlement device (3), comprising:
a processor (61) configured to:
receive a selection of a price payment method out of a plurality of price payment methods by a store clerk via a first touch panel (32) or a keyboard (31); and
receive a selection of a price payment method out of the plurality of price payment methods by a customer via a second touch panel (34), wherein
when the first touch panel and the keyboard are configured to provide the selection, the processor is configured not to receive the selection from the second touch panel, and
when the second touch panel is configured to provide the selection, the processor is configured not to receive the selection from the first touch panel and the keyboard.

2. The settlement device according to claim 1, wherein the processor is further configured to cause the second touch panel to display a notification to the customer
to notify the customer that the store clerk will make the selection of the price payment method out of the plurality of price payment methods.

3. The settlement device according to claim 1 or 2, wherein the processor is further configured to:
cause the first touch panel to display a payment method selection screen, and
cause the second touch panel to display a screen other than the payment selection screen while the first touch panel displays the payment selection screen.

4. The settlement device according to any one of claim 1 or 2, wherein the processor is further configured to:
cause the second touch panel to display a payment method selection screen, and
cause the first touch panel to display a screen other than the payment selection screen while the second touch panel displays the payment selection screen.

5. The settlement device according to claim 4, wherein the processor is further configured to:
cause the first touch panel to display the payment method selection screen and the second touch panel to display a screen other than the payment selection screen after a switching input operation is received via the first touch panel.

6. The settlement device according to any one of claims 1 to 5, wherein the keyboard includes a dedicated key for each of the plurality of price payment methods.

7. The settlement device according to any one of claims 1 to 6, wherein the processor is further configured to:
cause the first touch panel to display a first payment method selection screen,
cause the second touch panel to display a second payment method selection screen,
cause the second touch panel to display a screen other than the second payment selection screen while the first touch panel displays the first payment selection screen, and
cause the first touch panel to display a screen other than the first payment selection screen while the second touch panel displays the second payment selection screen.

8. The settlement device according to claim 7, wherein the first payment selection screen includes at least one price payment method not included on the second payment selection screen.

9. A point-of-sale system, comprising:
a first touch panel (32) positioned for operation by a store clerk;
a keyboard (31) positioned for operation by the store clerk;
a second touch panel (34) positioned for operation by a customer, and
the processor (61) as defined in any one of claims 1 to 8.

10. The point-of-sale system according to claim 9, wherein the keyboard includes a dedicated key for each of the plurality of price payment methods.

11. A settlement method for point-of-sale systems, the method comprising:
causing a first touch panel to display a first payment method selection screen to a store clerk while a second touch panel for a customer displays a different screen that is not a payment selection screen;
causing the second touch panel to display a second payment method selection screen while the first touch panel displays a screen that is not a payment selection screen;
controlling the point-of-sale system not to receive input for selecting a payment method from the second touch panel while the first touch panel displays the first payment selection screen; and
controlling the point-of-sale system not to receive input for selecting the payment from the first touch panel while the second touch panel displays the second payment selection screen.

12. The settlement method according to claim 11, wherein the first payment selection screen includes at least one payment method not included on the second payment selection screen.

13. The settlement method according to claim 11 or 12, further comprising:
causing the first touch panel to display the first payment method selection screen and the second touch panel to display a screen other than the second payment selection screen after a switching input operation is received via the first touch panel.

14. The settlement method according to any one of claims 11 to 13, further comprising:
controlling the point-of-sale system not to receive input for selecting the payment from a keyboard for the store clerk while the second touch panel displays the second payment selection screen.

15. The settlement method according to claim 14, wherein the keyboard includes a dedicated key for each of a plurality of payment methods.
